# EUROPÄISCHE PATENTSCHRIFT

(11) **EP 1 396 326 B1**
(45) Veröffentlichungstag und Bekanntmachung des Hinweises auf die Patenterteilung: **05.11.2008**
(21) Anmeldenummer: 03011989.5
(22) Anmeldetag: 28.05.2003
(51) Int. Cl.: B29C 45/16, B60K 15/035, F16L 47/20, F16L 47/28

(54) **Bauteil zum Verbinden einer Fluidleitung mit einer Öffnung eines Kunststoffbehälters**
Connector between a fluid conduit and the opening of a resin container
Connecteur entre un conduit de fluide et l'orifice d'un récipient

(30) Priorität: 03.09.2002 DE 10241286
(43) Veröffentlichungstag der Anmeldung: 10.03.2004
(60) Teilanmeldung: 07006360.7
(73) Patentinhaber: NORMA Germany GmbH, 63277 Maintal (DE)
(72) Erfinder: Kertesz, Janos, 65719 Hofheim (DE)
(74) Vertreter: Knoblauch, Andreas

(56) Entgegenhaltungen:
- EP-A- 1 063 078
- EP-A- 1 095 962
- EP-A- 1 233 174
- DE-A- 10 048 973
- DE-A- 10 062 997
- US-A- 5 798 048
- US-A1- 2001 050 478

## Beschreibung

Die Erfindung bezieht sich auf ein Bauteil zum Verbinden einer Fluidleitung mit einer Öffnung eines überwiegend aus HDPE bestehenden Behälters gemäß dem Oberbegriff von Anspruch 1.

Bei einem aus der DE 100 62 997 A1 bekannten Bauteil dieser Art, einem rohrartigen Stutzen, enthält die erste Komponente Polyethylen (PE), insbesondere hochdichtes Polyethylen (HDPE), und die zweite Komponente Polyamid (PA). Ein von dem Behälter, an dem der Rohrstutzen angeschweißt werden soll, entfernt liegender Abschnitt der ersten Komponente ist von dem Material der zweiten Komponente umspritzt. Ein Ringteil der ersten Komponente wird am Behälter angeschweißt. Der Behälter enthält ebenfalls im wesentlichen HDPE. Er geht daher bei der Verschweißung eine Schmelzverbindung mit der ersten Komponente ein. Das Polyamid der zweiten Komponente hat eine hohe Diffusionssperrfähigkeit und geringe Quellfähigkeit gegenüber Kraftstoffen, wie Benzin oder Dieselöl, und darüber hinaus eine hohe mechanische Festigkeit. In dem von der zweiten Komponente umspritzten Bereich der ersten Komponente ist der Rohrstutzen mithin weitgehend undurchlässig gegenüber ein Hindurchdiffundieren von Kraftstoffen. Obwohl die Materialien der beiden Komponenten in ihrem Überlappungsbereich durch Brückenbildung eine innige Schmelzverbindung eingehen, kann dennoch der Fall auftreten, daß im Überlappungsbereich zwischen den beiden Komponenten eine Leckage auftritt, bei der Kraftstoff entlang der Verbindungsfläche der Komponenten austritt, weil die Verbindungsfläche über ihren inneren Rand hinweg dem Kraftstoff unmittelbar ausgesetzt ist und wegen der höheren Quellfähigkeit des Materials der ersten Komponente als das der zweiten Komponente zur Rißbildung neigt. Darüber hinaus kann der Kraftstoff durch das Ringteil hindurchdiffundieren.

In EP 1 095 962 A2 werden Kunststoffformteile vorgeschlagen, die bei ihrer Verwendung in Kontakt mit Kraftstoff stehen, und die mit Hilfe von Schweißverfahren mit anderen Bauteilen aus thermoplastischem Kunststoffmaterial verbunden werden sollen. Die darin beschriebenen Kunststoffformteile sollen durch ein Zweikomponenten-Monosandwichverfahren hergestellt werden, und eine innere Schicht aus Polyacetal und eine äußere Schicht aus Polyolefin aufweisen.

In DE 100 62 997 A1 wird ein rohrartiger Stutzen vorgeschlagen, der zum Verschweißen mit einem Kunststoffbehälter aus Polyethylen geeignet ist. Der rohrartige Stutzen ist aus Polyamid hergestellt und weist an seiner Vorderseite einen kragenförmigen ersten Teil auf, der an einem rohrförmigen zweiten Teil aus Polyethylen angespritzt ist. Zwischen dem ersten und dem zweiten Teil ist eine Nut vorgesehen, so dass Verformungen des kragenförmigen ersten Teils des Stutzens im Rahmen des Schweißvorgangs möglich sind.

Der Erfindung liegt die Aufgabe zugrunde, ein Bauteil der eingangs genannten Art anzugeben, bei dem ein Austritt von Kraftstoff in höherem Maße verhindert wird.

Die Lösung dieser Aufgabe besteht darin, daß das Material der ersten Komponente die zweite Komponente wenigstens bis zu einer Einspritzstelle einschließt, die einer am Behälter anzuschweißenden Fläche des Bauteils in möglichst großer bis größtmöglicher Entfernung abgekehrt ist und über die Material der zweiten Komponente in die noch plastische Seele des Materials der ersten Komponente eingespritzt worden ist.

Bei dieser Lösung ist es möglich, daß kein oder allenfalls ein Rand der Verbindungsfläche beider Komponenten dem Kraftstoff unmittelbar ausgesetzt ist. Eine Leckage entlang der Verbindungsflächen ist daher weitgehend bis völlig vermeidbar. Wenn der Abstand zwischen der am Behälter anzuschweißenden Fläche und der Einspritzstelle dem maximal möglichen entspricht, wird eine Leckage wegen des entsprechend langen Weges, den der Kohlenwasserstoff über die Verbindungsfläche zurücklegen müßte, verhindert. Dieser Weg wird außerdem durch eine Welligkeit der Verbindungsfläche, wie sie durch das Einspritzen an den Berührungsflächen der noch plastischen Materialien beider Komponenten hervorgerufen wird, nach Art einer Labyrinth-Dichtung verlängert. Die Welligkeit ergibt zugleich eine formschlüssige Verbindung. Sodann ist die Sperrfähigkeit im Überlappungsbereich der beiden Komponenten gegen ein Hindurchdiffundieren von Kraftstoffen weiterhin hoch, weil das Hindurchdiffundieren durch die nahezu diffusionsdichte zweite Komponente weitgehend verhindert wird. Außerdem ist die mechanische Festigkeit und Wärme-Formbeständigkeit im Überlappungsbereich sehr hoch. Darüber hinaus ermöglicht das Einspritzen des Materials der einen Komponente in die noch plastische Seele der anderen Komponente die Herstellung des Bauteils in demselben Formwerkzeug.

Das Ringteil begrenzt zwischen sich und einem koaxialen rohrförmigen Fortsatz des Bauteils eine koaxiale Ringnut, und die axiale Dicke des Ringteils und die Tiefe der Ringnut sind so gewählt, daß die Dicke nach dem Anschweißen jener Fläche am Behälter wegen der teilweise seitlich ausweichenden Schmelze des Ringteils erheblich geringer als vor dem Anschweißen ist, aber der Boden der Ringnut weiterhin einen Abstand von dem Behälter aufweist. Beim Anschweißen des Ringteils am Behälter verringert sich mithin die Dicke des Ringteils durch die seitlich ausweichende Schmelze des Ringteils, so daß die einem Hindurchdiffundieren des Kraftstoffs nach dem Anschweißen noch verbleibende Ringfläche in der Ringnut sehr gering ist, aber dennoch das Material der zweiten Komponente eingeschlossen bleibt.

Das Material der ersten Komponente weist ein funktionalisiertes PE auf, das mit dem Material des Behälters und mit dem Material der zweiten Komponente verschmolzen ist.

Die zweite Komponente weist wenigstens eines der Materialien EVOH, PA, PEN, PBT, PET, PBN, LCP, PPS, PPA, PP, aliphatisches Polyketon und Fluorthermoplast auf. Die Materialien EVOH, PA und PP gehen zumindest mit dem funktionalisierten PE der einen Komponente beim Einspritzen des Materials der anderen Komponente in das der ersten Komponente eine Schmelzverbindung ein, die nicht nur stoffschlüssig, sondern auch formschlüssig ist. Für diese und die übrigen Materialien gilt das gleiche für praktisch alle Polyolefine und/oder Copolymere nach entsprechender Modifikation.

Vorzugsweise ist dafür gesorgt, daß das Material der zweiten Komponente den größten Teil der Länge der Rohrwand ausfüllt. Dementsprechend ist das Bauteil über nahezu seine gesamte Länge ebenso diffusionsdicht und Stabil wie das Material der zweiten Komponente.

Dies ist besonders dann der Fall, wenn das Material der zweiten Komponente einen der am Behälter anzuschweißenden Fläche abgekehrten Endabschnitt des rohrförmigen Bauteils bildet.

Andererseits kann sich bei einem weitgehend rohrförmigen Bauteil das Material der zweiten Komponente von einem die anzuschweißende Fläche aufweisenden Ringteil der ersten Komponente bis zu dem dieser Fläche abgekehrten Ende des rohrförmigen Bauteils erstrecken.

Sodann kann dafür gesorgt sein, daß die zweite Komponente eine dritte Komponente einschließt, durch die wenigstens eine der Eigenschaften Festigkeit, Diffusionssperrfähigkeit und Wärme-Formbeständigkeit des Bauteils erhöht wird. Diese dritte Komponente kann ebenfalls dadurch in der zweiten Komponente angeordnet werden, daß ihr Material in die noch plastische Seele der zweiten Komponente eingespritzt wird. Auch dies kann in demselben Formwerkzeug erfolgen, in dem die erste und zweite Komponente geformt werden.

Die dritte Komponente kann überwiegend eines der Materialien EVOH, PA, POM, PEN, PBT, PET, PBN, LCP, PPS, PPA, aliphatisches Polyketon und Fluorthermoplast aufweisen, so daß die Eigenschaften Festigkeit, Diffusionssperrfähigkeit und Wärme-Formbeständigkeit des Bauteils verbessert werden.

Wenigstens die erste Komponente kann, in an sich bekannter Weise (DE 38 28 696 A1), einen elektrisch leitfähigen Zusatz aufweisen, so daß sich das Bauteil durch einen sich an einer Fläche des Bauteils entlang bewegenden Kraftstoff, insbesondere beim Hindurchleiten von Kraftstoff durch ein rohrförmig ausgebildetes Bauteil, nicht elektrostatisch auflädt und das Entzünden des Kraftstoffs durch eine Funkenentladung in dem Bauteil vermieden wird.

Das Bauteil kann im Querschnitt weitgehend U- oder trapezförmig sein, so daß es als Verschluß (Deckel oder Stopfen) für die Behälteröffnung dienen kann.

An einem derart geformten Bauteil kann wenigstens ein weiteres Funktionsteil angespritzt sein, z.B. ein Halterungs-Clip, der z.B. zur Halterung einer Fluidleitung oder eines elektrischen Kabels dienen kann.

Die Erfindung und ihre Weiterbildungen werden nachstehend anhand der beiliegenden Zeichnungen bevorzugter Ausführungsbeispiele näher beschrieben. Darin stellen dar:
- Fig. 1: einen Axialschnitt durch ein erfindungsgemäßes rohrförmiges Bauteil in einer Lage, in der es an einer Öffnung eines Behälters angeschweißt wird, um eine nicht dargestellte Fluidleitung mit der Behälteröffnung zu verbinden,
- Fig. 2: ein zweites Ausführungsbeispiel eines erfindungsgemäßen Bauteils im Axialschnitt in der gleichen Lage wie das Bauteil nach Fig. 1,
- Fig. 3: ein drittes Ausführungsbeispiel eines erfindungsgemäßen Bauteils im Axialschnitt in der gleichen Lage wie das Bauteil nach Fig. 1

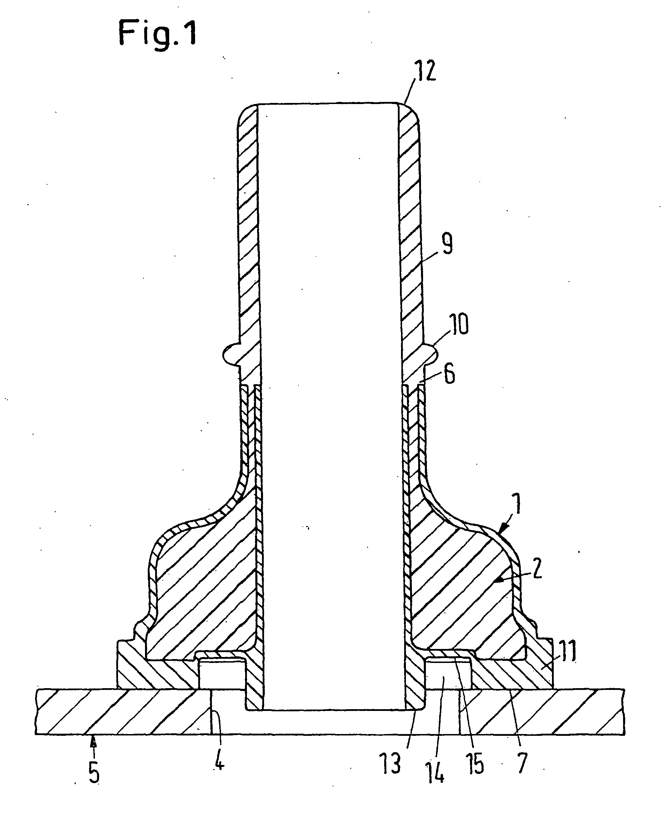

Das in Fig. 1 dargestellte Bauteil stellt einen rohrförmigen Stutzen dar, der aus zwei Komponenten 1 und 2 besteht und am Rande einer Öffnung 4 eines Behälters 5 angeschweißt wird, von dem nur ein Teil seiner Wand dargestellt ist. Der Behälter 5 dient zur Aufnahme des Kraftstoffs, insbesondere Benzin oder Dieselöl, eines Kraftfahrzeugs und der Rohrstutzen zum Verbinden einer nicht dargestellten Fluidleitung mit der Öffnung 4 des Behälters, über die der Behälter mit Kraftstoff gefüllt wird.

Der Behälter 5 ist in der Regel mehrschichtig, wobei seine äußere Schicht aus HDPE und eine mittlere Schicht aus einem Material besteht, das keinen Kraftstoff hindurchdiffundieren läßt.

Die Materialien der ersten Komponente 1 und der zweiten Komponente 2 enthalten überwiegend thermoplastischen Kunststoff. Das Material der ersten Komponente 1 ist so gewählt, das es mit dem Material des Behälters 5 eine Schmelzverbindung durch Reibschweißen oder Spiegelschweißen eingeht. Gegebenenfalls hat es keine hinreichende Diffusionssperrfähigkeit gegenüber Kohlenwasserstoffen, wie Benzin oder Dieselöl. Außerdem hat es eine relativ geringe mechanische Festigkeit, weshalb es mitunter eine Verstärkung aufweist. Ferner hat es eine relativ hohe Quellfähigkeit gegenüber Kohlenwasserstoffen, wie Benzin oder Dieselöl. So weist die erste Komponente 1 ein Polyolefin, insbesondere ein funktionalisiertes PE (Polyethylen) auf, das mit dem Material des Behälters 5 verschmelzbar ist.

Das Material der zweiten Komponente 2 hat eine erheblich höhere Diffusionssperrfähigkeit und geringere Quellfähigkeit gegenüber Kohlenwasserstoffen der genannten Art und eine höhere mechanische Festigkeit, auch nach einer Kohlenwasserstoff-Einwirkung, sowie eine höhere Formbeständigkeit in der Wärme als das Material der ersten Komponente 1.

Die zweite Komponente 2 enthalt wenigstens eines der Materialien EVOH (Ethylenvenylalkohol), PA (Polyamid), POM (Polyoxymethylen), PBT (Polybutylenterephthalat), PET (Polyethylenterephthalat), PEN (Polyethylennaphthalat), PBN (Polybutylennaphthalat), LCP (Liquid Crystalline Polymer, d.h. flüssigkristallines Polymer), PPS (Polyphenylensulfid), PPA (Polyphthalamid, d.h. ein partiell aromatisches Polyamid), PP (Polylpropylen), aliphatisches Polyketon und Fluorthermoplast.

Das rohrförmige Bauteil wird in der Weise hergestellt, daß das Material der ersten Komponente 1 die zweite Komponente 2 wenigstens bis zu einer Einspritzstelle 6 einschließt. Diese Einspritzstelle 6 ist einer am Behälter 5 anzuschweißenden Fläche 7 des Bauteils abgekehrt und hat von dieser einen relativ großen Abstand, der hier etwa der halben Länge des Rohrstutzens entspricht, vorzugsweise noch größer ist. Zunächst wird das Material der erste Komponente 1 in eine Kavität eines Formwerkzeugs eingespritzt, und bevor es vollständig ausgehärtet ist, wird in die noch plastische Seele des Materials der ersten Komponente 1 das Material der zweiten Komponente 2 an der Einspritzstelle 6 eingespritzt. Danach wird in einem weiteren Formwerkzeugteil ein der Fläche 7 abgekehrter Endabschnitt 9 mit einer in der Nähe der Einspritzstelle 6 liegenden Halterippe 10 von der Einspritzstelle 6 aus angespritzt. Die - Fluidleitung wird über die Halterippe und über die Einspritzstelle 6 hinweg auf den Stutzen aufgeschoben und mittels einer Schlauchschelle hinter der Halterippe 10 festgeklemmt. Nach dem Aushärten und Entformen hat das Bauteil die dargestellte Form mit einem die anzuschweißende Fläche 7 aufweisenden Ringteil 11 der ersten Komponente 1, wobei sich das Material der zweiten Komponente 2 von dem Ringteil 11 bis zu dem der Fläche 7 abgekehrten Ende 12 des Bauteils erstreckt.

Das Ringteil 11 begrenzt zwischen sich und einem koaxialen rohrförmigen Fortsatz 13, der zur Zentrierung beim Anschweißen des Bauteils am Behälter 5 in die Öffnung 4 ragt, eine koaxiale Ringnut 14, wobei die axiale Dicke des Ringteils 11 und die Tiefe der Ringnut 14 so gewählt sind, daß die Dicke nach dem Anschweißen der Fläche 7 am Behälter 5 wegen der teilweise seitlich in die Ringnut 14 und nach außen ausweichenden Schmelze des Ringteils 11 erheblich geringer ist, aber der Boden 15 in der Ringnut 14 weiterhin einen Abstand vom Behälter 5 aufweist, der etwa der verbliebenen axialen Dicke des Ringteils 11 entspricht.

Das Material der Komponente 1 schließt mithin die Komponente 2 bis zur Einspritzstelle 6 vollständig ein und bildet anschließend zwischen der Einspritzstelle 6 und dem Ende 12 einen Endabschnitt 9, der nur aus dem Material der Komponente 2 besteht. Das Material der Komponente 1 hat zwar eine erheblich geringere Diffusionssperrfähigkeit als das Material der Komponente 2, doch kann es nur noch durch das nach dem Anschweißen der Fläche 7 am Behälter 5 erheblich flachere Ringteil 11 hindurchdiffundieren. Selbst wenn theoretisch ein Leckagepfad entlang der Grenz- oder Verbindungsfläche zwischen den beiden Komponenten 1 und 2 vom radial inneren Ende der Einspritzstelle 6 bis zum radial äußeren Ende der Einspritzstelle 6 auftreten sollte, wenn die Materialien der beiden Komponenten 1 und 2 nicht durchgehend über die gesamte Grenzfläche innig verschmolzen wären, wäre der Leckagepfad sehr lang, zumal die Grenzfläche beim Einspritzen des Materials der Komponente 2 in die noch plastische Seele der Komponente 1 aufgrund einer unterschiedlichen Dichte der beiden Materialien gewellt wird oder sich durch Wirbelbildung kräuselt, so daß der Leckagepfad tatsächlich erheblich länger als dargestellt wäre und die Grenzfläche eine Art Labyrinthdichtung bildet, über die mithin tatsächlich kein Kraftstoff durch Leckage austreten könnte. Hinzu kommt, daß eine auf dem Rohrstutzen festgeklemmte Fluidleitung, zum Beispiel ein Schlauch aus elastischem Material, die Einspritzstelle 6 dicht abdeckt. Da das Material der Komponente 2 eine hohe Formbeständigkeit in der Wärme, eine hohe mechanische Festigkeit und eine geringe Quellfähigkeit aufweist, gelten diese Eigenschaften im wesentlichen auch für das gesamte Bauteil, da das Material der zweiten Komponente den größten Teil des Gesamtvolumens des Bauteils ausfüllt. Zusätzlich zu der stoffschlüssigen Verbindung zwischen den Komponenten 1 und 2 bewirkt die Welligkeit ihrer Grenzfläche auch eine feste Formschlußverbindung.

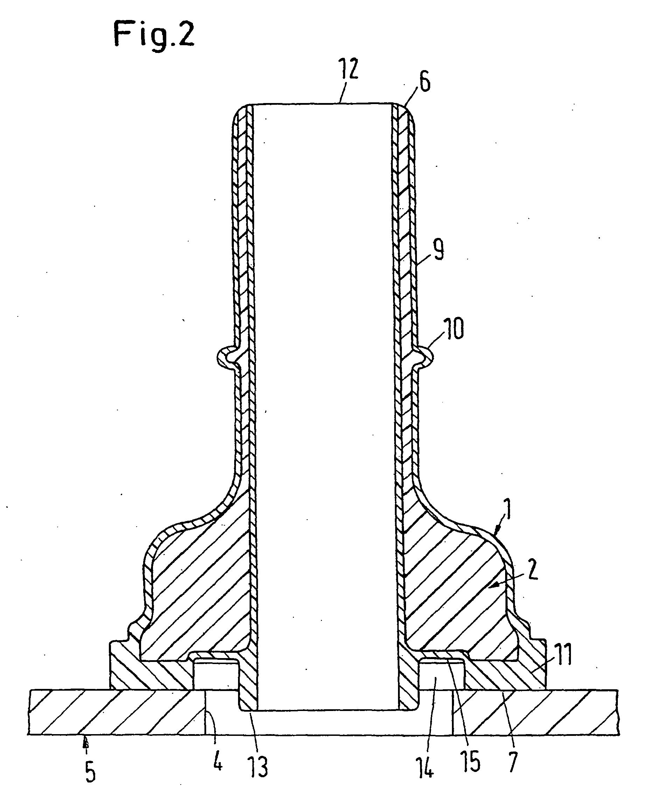

Das Ausführungsbeispiel nach Fig. 2 unterscheidet sich von dem nach Fig. 1 nur dadurch, daß sich das Material der Komponente 1 über die gesamte Länge des rohrförmigen Bauteils erstreckt und das Material der Komponente 2 bis zum Ende 12 einschließt, wobei die Einspritzstelle 6 mit dem der Fläche 7 des Ringteils 11 abgekehrten Ende 12 zusammenfällt. Hierbei wäre ein theoretischer Leckagepfad in Axialrichtung um die gesamte Komponente 2 herum sehr viel länger als bei dem ersten Ausführungsbeispiel nach Fig. 1, abgesehen davon, daß eine auf dem Rohrstutzen festgeklemmte Fluidleitung den Austritt eines Fluids verhindern würde.

Im übrigen hat das zweite Ausführungsbeispiel die gleichen Vorteile wie das erste Ausführungsbeispiel, abgesehen von einer etwas dünneren Wanddicke der Komponente 2 im Endabschnitt 9, die jedoch ebenso gewählt werden könnte, wie die Wanddicke des Endabschnitts 9 bei dem ersten Ausführungsbeispiel nach Fig. 1.

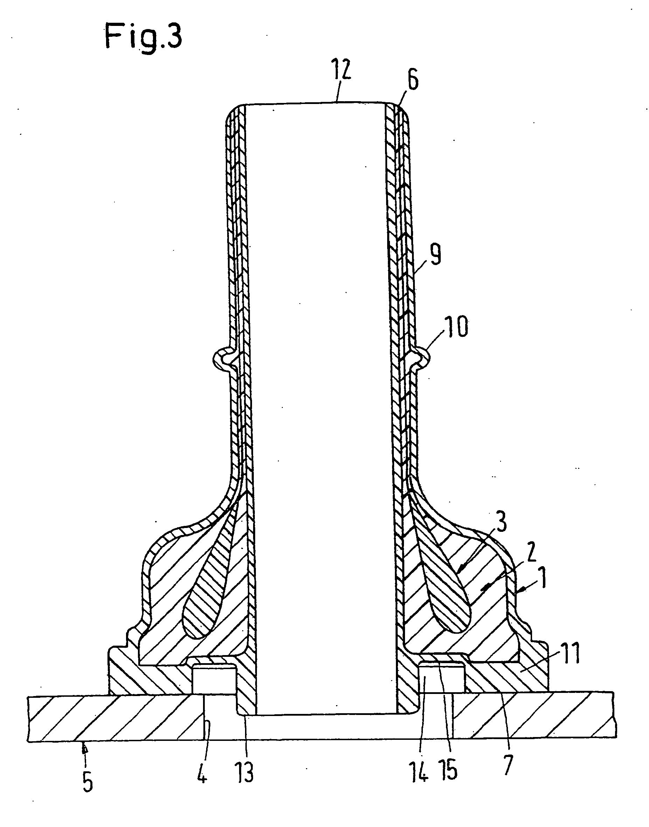

Das dritte Ausführungsbeispiel nach Fig. 3 unterscheidet sich von dem zweiten Ausführungsbeispiel nach Fig. 2 nur dadurch, daß in die zweite Komponente 2 noch eine dritte Komponente 3 ebenfalls von der Einspritzstelle 6 der zweiten Komponente 2 aus - nach dem Einspritzen des Materials der Komponente 2 in die noch plastische Seele des Materials der Komponente 1 von der mit dem Ende 12 zusammenfallenden Einspritzstelle 6 aus - in die noch plastische Seele des Materials der Komponente 2 eingespritzt wurde und hierbei einen erheblichen Teil des Volumens der Komponente 2 bis nahe an das Ringteil 11 bzw. den Boden 15 der Ringnut 14 ausfüllt. Das Material der Komponente 3 ist hierbei so gewählt, daß es wenigstens eine der Eigenschaften Festigkeit, Diffusionssperrfähigkeit und Wärme-Formbeständigkeit des Bauteils erhöht. Zu diesem Zweck kann die dritte Komponente 3 überwiegend eines der Materialien EVOH, PA, POM, PEN, PBT, PET, PBN, LCP, PPS, PPA, aliphatisches Polyketon und Fluorthermoplast aufweisen.

Vorzugsweise hat die erste Komponente 1 bei allen Ausführungsbeispielen einen elektrisch leitfähigen Zusatz. Aber auch die Komponenten 2 und 3 können einen elektrisch leitfähigen Zusatz aufweisen. In allen Fällen kann es sich bei diesem Zusatz um Graphitteilchen, Kohlenstoffasern oder Eisenteilchen, insbesondere faserförmige Eisenteilchen, handeln. Durch den elektrisch leitfähigen Zusatz wird eine elektrische Aufladung durch eine Relativbewegung zwischen dem Kraftstoff und dem rohrförmigen Bauteil und damit die Gefahr einer Funkenentladung und Entzündung des Kraftstoffs vermieden.

Elektrisch leitfähige Fasern bewirken gleichzeitig eine Verstärkung des Materials der betreffenden Komponente. Anstelle leitfähiger Faserteile oder zusätzlich können aber auch Verstärkungsteilchen aus Kunststoff, Glas oder Mineralpartikeln verwendet werden.

Anstelle des dargestellten rohrförmigen Bauteils bzw. Stutzens kann ein Bauteil mit einem weitgehend U- oder trapezförmigen Querschnitt als Deckel oder Stopfen vorgesehen sein, der zum Verschließen einer Blindöffnung oder dergleichen im Behälter dient. Die Einspritzstelle der zweiten und gegebenenfalls dritten Komponente würde dann vorzugsweise in der Mitte der Außenseite des Bauteils liegen. An dem U- oder trapezförmigen Bauteil kann darüber hinaus ein weiteres Funktionsteil angespritzt sein, z.B. ein Halterungs-Clip für eine Fluidleitung oder ein elektrisches Kabel.

## Patentansprüche

1. Weitgehend rohrförmiges Bauteil zum Verbinden einer Fluidleitung mit einer Öffnung (4) eines überwiegend aus HDPE bestehenden Behälters (5), wobei das Bauteil wenigstens eine erste und eine zweite jeweils überwiegend aus thermoplastischem Kunststoff bestehende Komponente (1, 2) aufweist, das Material der ersten Komponente (1) mit dem Material des Behälters eine Schmelzverbindung durch Schweißen eingeht, aber keine hinreichende Diffusionssperrfähigkeit gegenüber Kohlenwasserstoffen, wie Benzin oder Dieselöl, aufweist und das Material der zweiten Komponente (2) eine höhere Diffusionssperrfähigkeit und geringere Quellfähigkeit gegenüber Kohlenwasserstoffen und eine höhere mechanische Festigkeit, auch nach einer Kohlenwasserstoff-Einwirkung, sowie eine höhere Formbeständigkeit in der Wärme als das Material der ersten Komponente (1) hat, wobei das Material der ersten Komponente (1) die zweite Komponente (2) von einer am Behälter (5) anzuschweißenden Fläche (7) des Bauteils wenigstens bis zu einer Einspritzstelle (6) einschließt, über die Material der zweiten Komponente (2) in die noch plastische Seele des Materials der ersten Komponente (1) eingespritzt worden ist und die so gewählt ist, daß im Betrieb des Bauteils kein oder allenfalls ein auf der Innenseite des Bauteils liegender Rand der Verbindungsfläche beider Komponenten (1, 2) dem Kohlenwasserstoff unmittelbar ausgesetzt ist, **dadurch gekennzeichnet, daß** die zweite Komponente (2) wenigstens eines der Materialien EVOH, PA, PEN, PBT, PET, PBN, LCP, PPS, PPA, PP, aliphatisches Polyketon und Fluorthermoplast aufweist, daß die erste Komponente (1) ein derart funktionalisiertes PE aufweist, daß es stoffschlüssig mit dem Material der zweiten Komponente (2) verschmolzen ist und mit dem Material des Behälters verschmelzbar ist, daß sich das Material der zweiten Komponente (2) von einem die anzuschweißende Fläche (7) aufweisenden Ringteil (11) der ersten Komponente (1) bis zu der Einspritzstelle (6) erstreckt und daß das Ringteil (11) zwischen sich und einem koaxialen rohrförmigen Fortsatz (13) des Bauteils eine koaxiale Ringnut (14) begrenzt und die axiale Dicke des Ringteils (11) und die Tiefe der Ringnut (14) so gewählt sind, daß die Dicke nach dem Anschweißen jener Fläche (7) am Behälter (5) wegen der teilweise seitlich ausweichenden Schmelze des Ringteils (11) erheblich geringer ist, aber der Boden der Ringnut (14) weiterhin einen Abstand von dem Behälter (5) aufweist.

2. Bauteil nach Anspruch 1, **dadurch gekennzeichnet, daß** das Material der zweiten Komponente (2) den größten Teil der Länge der Rohrwand ausfüllt.

3. Bauteil nach Anspruch 2, **dadurch gekennzeichnet, daß** das Material der zweiten Komponente (2) einen der am Behälter anzuschweißenden Fläche (7) abgekehrten Endabschnitt (9) des rohrförmigen Bauteils bildet.

4. Bauteil nach einem der Ansprüche 1 bis 3, **dadurch gekennzeichnet, daß** die zweite Komponente (2) eine dritte Komponente (3) einschließt, durch die wenigstens eine der Eigenschaften Festigkeit, Diffusionssperrfähigkeit und Wärme-Formbeständigkeit des Bauteils erhöht wird.

## Claims

1. Largely tubular structural member for connecting a fluid pipe to an opening (4) of a container (5) consisting predominantly of HDPE, wherein the structural member has at least one first and one second component (1,2) consisting in each case predominantly of thermoplastic material, the material of the first component (1) enters into a fused joint with the material of the container by welding, but does not have sufficient diffusion barrier capability with respect to hydrocarbons, such as motor fuel or diesel fuel, and the material of the second component (2) has a higher diffusion barrier capability and lower swelling capacity with respect to hydrocarbons and a higher mechanical strength, even after action of hydrocarbon, and a higher dimensional stability in heat than the material of the first component (1), wherein the material of the first component (1) surrounds the second component (2) by a surface (7) of the structural member to be welded onto the container (5) at least up to an injection point (6), via which material of the second component (2) has been injected into the still plastic core of the material of the first component (1) and which is selected so that in operation of the structural member, no edge or if need be one edge of the connecting surface of both components (1, 2) lying on the inner side of the structural member is exposed directly to the hydrocarbon, **characterised in that** the second component (2) comprises at least one of the materials EVOH, PA, PEN, PBT, PET, PBN, LCP, PPS, PPA, PP, aliphatic polyketone and fluoro-thermoplastic material, **in that** the first component (1) has such a functionalised PE that it is fused integrally with the material of the second component (2) and can be fused with the material of the container, **in that** the material of the second component (2) extends from an annular part (11) of the first component (1) having the surface (7) to be welded on up to the injection point (6) and **in that** the annular part (11) between it and a coaxial tubular extension (13) of the structural member defines a coaxial annular groove (14) and the axial thickness of the annular part (11) and the depth of the annular groove (14) are selected so that the thickness after welding of that surface (7) onto the container (5) is considerably lower because of the partly laterally escaping melt of the annular part (11), but the base of the annular groove (14) also has a distance from the container (5).

2. Structural member according to claim 1, **characterised in that** the material of the second component (2) fills out the largest part of the length of the pipe wall.

3. Structural member according to claim 2, **characterised in that** the material of the second component (2) forms an end section (9) of the tubular structural member facing away from the surface (7) to be welded onto the container.

4. Structural member according to one of claims 1 to 3, **characterised in that** the second component (2) surrounds a third component (3), by means of which at least one of the properties strength, diffusion barrier capability and thermal dimensional stability of the structural member is increased.

## Revendications

1. Élément structurel de forme largement tubulaire destiné à raccorder une conduite à fluide présentant une ouverture (4) d'un récipient (5) réalisé principalement en polyéthylène à haute densité (HDPE), ledit élément structurel comprenant au moins une première et une seconde composante (1, 2) réalisées respectivement principalement en matière thermoplastique, le matériau de la première composante (1) établissant avec le matériau du récipient une liaison par fusion par soudage, mais sans présenter une capacité suffisante de barrière anti-diffusion vis-à-vis des hydrocarbures, comme l'essence ou le carburant diesel, et le matériau de la seconde composante (2) présentant une plus forte capacité de barrière anti-diffusion et une plus faible susceptibilité d'enfler vis-à-vis des hydrocarbures et une solidité mécanique plus élevée, même après action des hydrocarbures, ainsi qu'une plus haute stabilité en forme sous l'effet de la chaleur que le matériau de la première composante (1), le matériau de la première composante (1) enfermant la seconde composante (2) depuis une surface (7) de l'élément structurel destinée à être soudée sur le récipient (5), au moins jusqu'à un emplacement d'injection (6) via lequel le matériau de la seconde composante (2) a été injecté dans l'âme encore plastique du matériau de la première composante (1), et sélectionné de telle façon que lors du fonctionnement de l'élément structurel, aucune partie de la surface de jonction des deux composantes (1, 2) ou tout au plus une bordure de cette surface de jonction située sur le côté intérieur de l'élément structurel est exposée directement aux hydrocarbures, **caractérisé en ce que** la seconde composante (2) comprend l'un au moins des matériaux parmi EVOH, PA, PEN, PBT, PET, PBN, LCP, PPS, PPA, PP, polycétones aliphatiques et matières thermoplastiques fluorées, **en ce que** la première composante (1) comprend un polyéthylène fonctionnel de telle manière qu'il est mis en fusion avec mélange de matière avec le matériau de la seconde composante (2) et susceptible d'être mis en fusion avec le matériau du récipient, **en ce que** le matériau de la seconde composante (2) s'étend depuis une partie annulaire (11), de la première composante, qui présente la surface à souder (7), jusqu'à l'emplacement d'injection (6), et **en ce que** la partie annulaire (11) délimite entre elle-même et un prolongement (13) coaxial de forme tubulaire de l'élément structurel, une gorge annulaire coaxial (14), et l'épaisseur axiale de la partie annulaire (11) et la profondeur de la gorge annulaire (14) sont ainsi choisies que l'épaisseur, après soudure de ladite surface (7) sur le récipient (5), est considérablement plus faible en raison de la fusion avec déport partiellement latéral de la partie annulaire (11), mais le fond de la gorge annulaire (14) présente encore une distance vis-à-vis du récipient (5).

2. Élément structurel selon la revendication 1, **caractérisé en ce que** le matériau de la seconde composante (2) remplit la majeure partie de la longueur de la paroi tubulaire.

3. Élément structurel selon la revendication 2, **caractérisé en ce que** le matériau de la seconde composante (2) forme un tronçon terminal (9), détourné de la surface (7) à souder sur le récipient, de l'élément structurel de forme tubulaire.

4. Élément structurel selon l'une des revendications 1 à 3, **caractérisé en ce que** la seconde composante (2) inclut une troisième composante (3) au moyen de laquelle l'une au moins des propriétés que sont la solidité, la capacité de barrière anti-diffusion et la stabilité de forme à la chaleur de l'élément structurel est augmentée.
